**Europäisches Patentamt**

**European Patent Office**

**Office européen des brevets**

(19)

(11) **EP 1 533 961 A2**

(12) **EUROPEAN PATENT APPLICATION**

(43) Date of publication:
**25.05.2005 Bulletin 2005/21**

(51) Int Cl.⁷: **H04L 25/02**

(21) Application number: **04026715.5**

(22) Date of filing: **10.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **19.11.2003 JP 2003389544**

(71) Applicant: **MATSUSHITA ELECTRIC INDUSTRIAL CO., LTD.**
**Kadoma-shi, Osaka 571-8501 (JP)**

(72) Inventors:
• **Soga, Shigeru**
  **Hyoga 622-0823 (JP)**
• **Hayashi, Takaya**
  **Kyota 621-0821 (JP)**

(74) Representative: **Grünecker, Kinkeldey, Stockmair & Schwanhäusser Anwaltssozietät**
**Maximilianstrasse 58**
**80538 München (DE)**

(54) **OFDM reception apparatus**

(57) The OFDM reception apparatus includes: a channel response calculation section for determining channel responses for pilot carriers; and an adaptive filter. The adaptive filter receives a first channel response for a first pilot carrier and a second channel response for at least one second pilot carrier at a same symbol, and repeats performing predetermined computation for the second channel response and updating a coefficient used in the computation so that the computation result is closer to the first channel response. Also, once the final value of the coefficient is determined, the adaptive filter performs the predetermined computation for a channel response at a selected pilot carrier frequency of the same number as the number of the at least one second pilot carrier at the same symbol as the second channel response, and outputs the computation result.

FIG. 1

EP 1 533 961 A2

**Description**

**BACKGROUND OF THE INVENTION**

The present invention relates to a reception apparatus for an orthogonal frequency division multiplexing (OFDM) signal, and more particularly, relates to an OFDM reception apparatus that estimates channel responses to thereby improve its reception performance.

In recent years, digital modulation schemes for transmitting audio signals and video signals have been actively developed. In particular, in terrestrial digital broadcasting, an OFDM modulation scheme, which is resistant to multipath environments, has received attention.

To realize synchronous demodulation of an OFDM signal, the following series of processing are executed. That is, an OFDM signal, which has pilot carriers for transmitting pilot signals arranged at predetermined frequency intervals, is received. The received time-domain signal is transformed to a frequency-domain signal by Fourier transform. Pilot signals are extracted from the frequency-domain signal, and channel responses are determined from the extracted pilot signals. Interpolation in the frequency-axis direction is then performed based on the determined channel responses with a frequency filter, to determine channel responses for data carriers over the entire band of the OFDM signal. Using the channel responses after the interpolation, distortion compensation is performed for the data carriers.

For frequencies outside the band of the OFDM signal, however, no channel responses are determined. Therefore, in interpolation for a carrier close to one of the ends of the band of the OFDM signal, it is not allowed to provide the frequency filter with channel responses at frequencies surrounding the center frequency. It is therefore known that the error is significantly large in channel responses determined by the interpolation and thus the reception characteristics greatly degrade.

To overcome the above problem, Japanese Laid-Open Patent Publication No. 11-205274, for example, discloses a technology in which the channel response at a frequency apart from the pilot carrier closest to an end of the band of the OFDM signal by a frequency interval between pilot carriers is assumed to be equal to that at the frequency of the pilot carrier closest to the end of the band, to thereby suppress the error in channel responses occurring from the interpolation. Also, Japanese Laid-Open Patent Publication No. 2002-9726 discloses a technology in which frequency-domain phase rotation caused by a time lag in a fast Fourier transform (FFT) window is considered, to suppress the error occurring from the interpolation.

However, the processing described above also causes the following problem. If amplitude variations and phase variations with the frequency occur due to multipath environments and the like, the error in channel responses determined by the interpolation becomes significantly large and thus the reception characteristics greatly degrade.

**SUMMARY OF THE INVENTION**

An object of the present invention is providing an OFDM reception apparatus that estimates channel responses at frequencies other than those of pilot carriers by extrapolation based on channel responses for pilot carriers, to thereby improve its reception performance.

Specifically, the present invention is directed to an OFDM reception apparatus for receiving an orthogonal frequency division multiplexing (OFDM) signal having pilot carriers for transmitting predetermined pilot signals, the pilot carriers being arranged at predetermined frequency intervals, the apparatus comprising: a channel response calculation section for determining channel responses for the pilot carriers and outputting the results; and an adaptive filter receiving a first channel response for a first pilot carrier and a second channel response for at least one second pilot carrier at a same symbol, for repeating performing predetermined computation for the second channel response and updating a coefficient used in the computation so that the result of the computation is closer to the first channel response, the adaptive filter also performing, once the final value of the coefficient is determined, the predetermined computation for a channel response at a selected pilot carrier frequency of the same number as the number of the at least one second pilot carrier at the same symbol as the second channel response, and outputting the computation result as an estimated channel response at a frequency apart from the selected pilot carrier frequency by the minimum of the difference in frequency between the first pilot carrier and the second pilot carrier.

According to the invention described above, the coefficient used in the computation for estimating channel responses is determined for each symbol, to enable correct estimation of channel responses. In particular, a channel response at a frequency outside the band of the OFDM signal can be estimated, and thus an error occurring by interpolating a channel response along the frequency axis can be suppressed. Accordingly, the reception performance of the OFDM reception apparatus can be improved.

Preferably, the adaptive filter uses two or more adjacent pilot carriers as the at least one second pilot carrier, and determines the estimated channel response using channel responses at the selected pilot carrier frequencies of the same number as the number of the two or more adjacent pilot carriers.

According to the invention described above, the estimation of a channel response is made based on channel responses at two or more pilot carrier frequencies, and this enables more exact estimation.

Preferably, the adaptive filter uses a pilot carrier adjacent to the first pilot carrier as one of the second pilot carriers, and determines a channel response at a pilot carrier frequency adjacent to the selected pilot carrier frequencies as the estimated channel response.

According to the invention described above, a channel response at a pilot carrier frequency adjacent to the selected pilot carrier frequency can be estimated accurately.

Preferably, the adaptive filter repeats determining a new estimated channel response using the estimated channel response and part of the channel responses used as the second channel responses in determination of the estimated channel response as new second channel responses.

According to the invention described above, further estimation of a channel response using the determined estimated channel response is repeated sequentially, and thus channel responses over a broad range can be determined with a small-scale circuit.

Preferably, the selected pilot carrier frequency includes a frequency of a pilot carrier having the highest frequency or a frequency of a pilot carrier having the lowest frequency, and the estimated channel response corresponds to a frequency outside the band of the OFDM signal.

According to the invention described above, a channel response at a frequency outside the band of the OFDM signal can be estimated accurately. Therefore, an error occurring due to interpolation at and around both ends of the band of the OFDM signal can be suppressed.

The OFDM reception apparatus described above may further include: a frequency axis interpolation section for determining, by interpolation, a channel response for a data carrier arranged at a frequency between pilot carriers in the OFDM signal based on the channel responses determined in the channel response calculation section and the estimated channel response; and a distortion compensation section for compensating, using the channel response determined in the frequency axis interpolation section, a waveform distortion in a data carrier corresponding to this channel response.

According to the invention described above, demodulation for data carriers can be made correctly, and thus error-reduced demodulated output can be obtained.

Preferably, the adaptive filter comprises: a complex filter for performing the predetermined computation for the second channel response; an error detector for detecting an error in the result of the predetermined computation with respect to the first channel response and outputting the detection result; a coefficient update device for updating the coefficient so that the error becomes smaller and outputting the result to the complex filter; and a controller for controlling the coefficient update device to continue outputting the determined latest coefficient once judging that the final value of the coefficient has been determined.

According to the invention described above, the coefficient used in the complex filter is determined, and then estimation of a channel response can be made using the determined coefficient.

Preferably, the coefficient update device updates the coefficient so that the value of an evaluation function based on the square of the error becomes smaller.

The coefficient update device preferably updates the coefficient by a least mean square (LMS) algorithm. Alternatively, the coefficient update device may update the coefficient by a recursive least square (RLS) algorithm.

As described above, according to the present invention, with use of the adaptive filter, estimation of channel responses by extrapolation along the frequency axis is made considering amplitude variations and phase variations occurring with the frequency. Therefore, channel responses can be estimated correctly even under various multipath environments and the like. In particular, a channel response at a frequency outside the band of the OFDM signal can be estimated correctly, and this permits correct interpolation along the frequency axis. Thus, the reception performance of the OFDM reception apparatus can be greatly improved.

**BRIEF DESCRIPTION OF THE DRAWINGS**

FIG. **1** is a block diagram of an OFDM reception apparatus of Embodiment 1 of the present invention.

FIG. **2** is a view illustrating a format of an OFDM signal.

FIG. **3** is a block diagram showing a configuration of an adaptive filter in FIG. **1**.

FIG. **4** is a view diagrammatically showing values of channel responses input into the adaptive filter and values of channel responses estimated in the adaptive filter.

FIG. **5** is a block diagram showing a configuration of an adaptive filter in Embodiment 2 of the present invention.

FIG. **6** is a block diagram showing a configuration of an error detector and a coefficient update device in FIG. **5**.

FIG. **7** is a view diagrammatically illustrating values of channel responses input into the adaptive filter and values

EP 1 533 961 A2

of channel responses estimated in the adaptive filter.

FIG. **8** is a block diagram showing a configuration of a coefficient update device in an alteration to Embodiment 2.

FIG. **9** is a block diagram of an OFDM reception apparatus of Embodiment 3 of the present invention.

FIG. **10** is a view illustrating sequential change of channel responses used in determination of a filter coefficient, in which the channel responses used are arranged in the order of frequencies.

## DESCRIPTION OF THE PREFERRED EMBODIMENTS

Hereinafter, preferred embodiments of the present invention will be described with reference to the accompanying drawings.

(Embodiment 1)

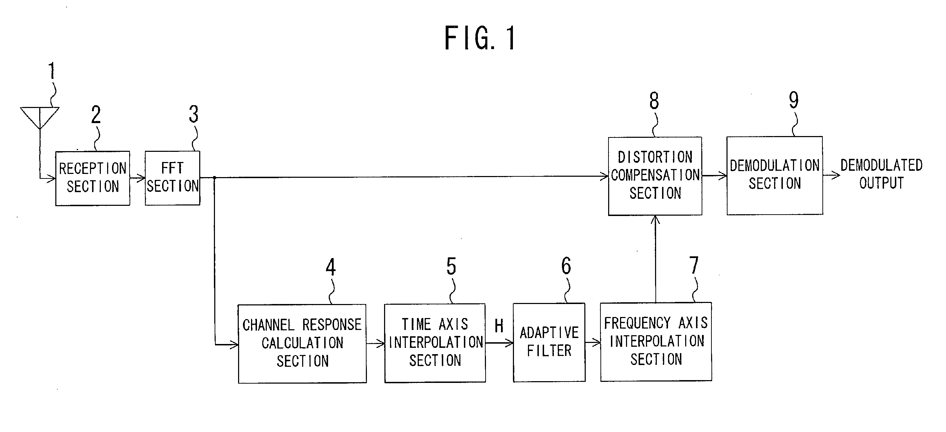

FIG. **1** is a block diagram of an OFDM reception apparatus of Embodiment 1 of the present invention. The OFDM reception apparatus of FIG. **1** includes a reception section **2**, a FFT section **3**, a channel response calculation section **4**, a time axis interpolation section **5**, an adaptive filter **6**, a frequency axis interpolation section **7**, a distortion compensation section **8** and a demodulation section **9**.

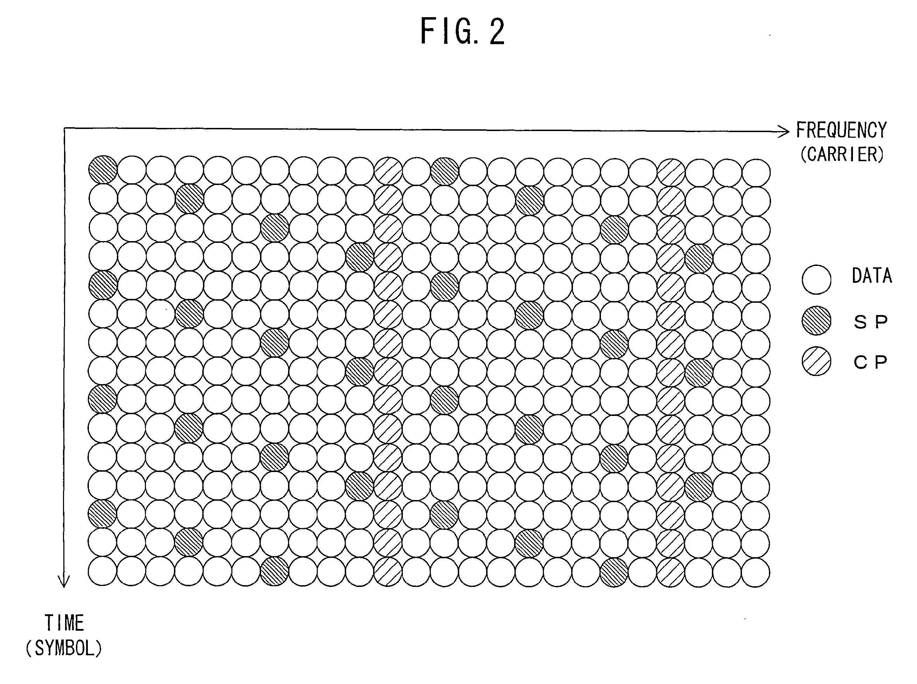

FIG. **2** is a view illustrating an exemplary format of an OFDM signal, in which signals transmitted are shown for respective symbols for each of a plurality of carriers included in the OFDM signal. In the example of FIG. **2**, one carrier every three carriers transmits predetermined scattered pilot (SP) signals. There are also carriers transmitting predetermined continual pilot (CP) signals. As used herein, carriers transmitting SP signals are called pilot carriers. Data carriers are provided at frequencies between the adjacent pilot carriers. The data carriers transmit data signals at all symbols, and the pilot carriers transmit data signals at symbols at which no pilot signals are transmitted.

Referring to FIG. **1**, a high-frequency signal received with an antenna **1** is input into the reception section **2**. The reception section **2** performs frequency conversion, synchronization, A/D conversion, FFT windowing and the like for the received signal, to obtain a baseband OFDM signal, and outputs the resultant signal to the FFT section **3**. The FFT section **3** performs fast Fourier transform for the input time-domain OFDM signal, to obtain a frequency-domain OFDM signal, and outputs the resultant signal to the channel response calculation section **4** and the distortion compensation section **8**.

The channel response calculation section **4** extracts SP signals from the frequency-domain OFDM signal, determines channel responses for the pilot carriers transmitting the SP signals using phase/amplitude information on the SP signals held in advance, and outputs the results to the time axis interpolation section **5**. In other words, the channel response calculation section **4** divides the received SP signals by known SP signals to determine channel responses for the pilot carriers transmitting the SP signals. The time axis interpolation section **5** performs interpolation along the time axis for the determined channel responses, to determine channel responses at symbols at which no SP signals exist, and outputs the resultant channel responses to the adaptive filter 6 together with the output of the channel response calculation section **4**.

The adaptive filter **6** adaptively calculates a filter coefficient for extrapolation at each symbol, as described later, based on the channel responses determined in the channel response calculation section **4** and the time axis interpolation section **5**. Also, at each symbol, the adaptive filter **6** estimates, by extrapolation based on the filter coefficient and a channel response for at least one pilot carrier, a channel response at a frequency higher than the frequency of the at least one pilot carrier, and outputs the results to the frequency axis interpolation section **7** together with the output of the time axis interpolation section **5**.

The frequency axis interpolation section **7** performs interpolation along the frequency axis using the channel responses determined in the channel response calculation section **4**, the time axis interpolation section **5** and the adaptive filter **6**, to determine channel responses for data carriers, and outputs the results to the distortion compensation section **8** together with the input channel responses. The distortion compensation section **8** compensates (equalizes) waveform distortion in data carriers included in the frequency-domain OFDM signal, and outputs the resultant signal to the demodulation section **9**. The demodulation section **9** performs demodulation and outputs the resultant data sequence as the demodulated output.

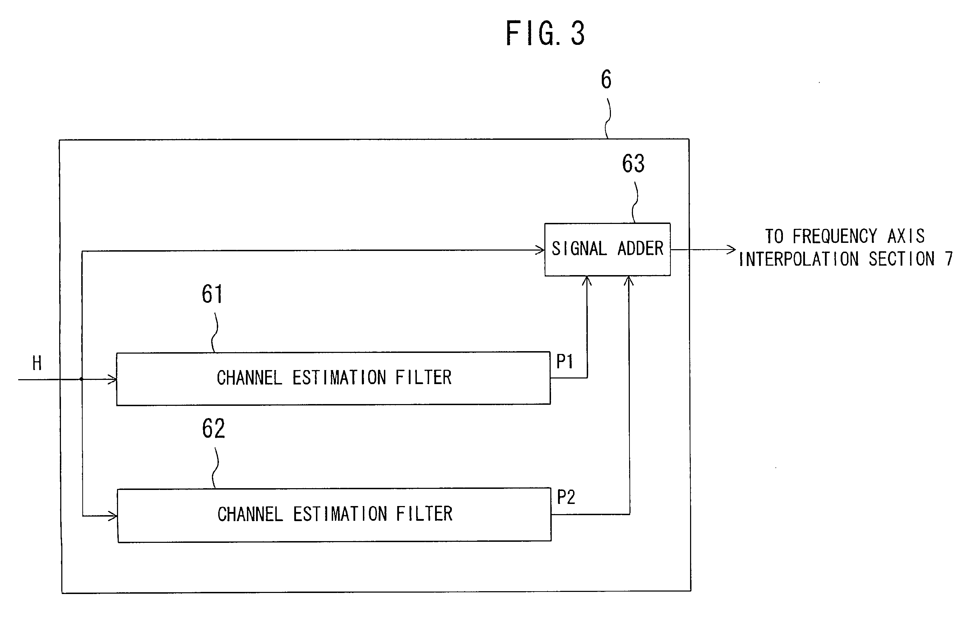

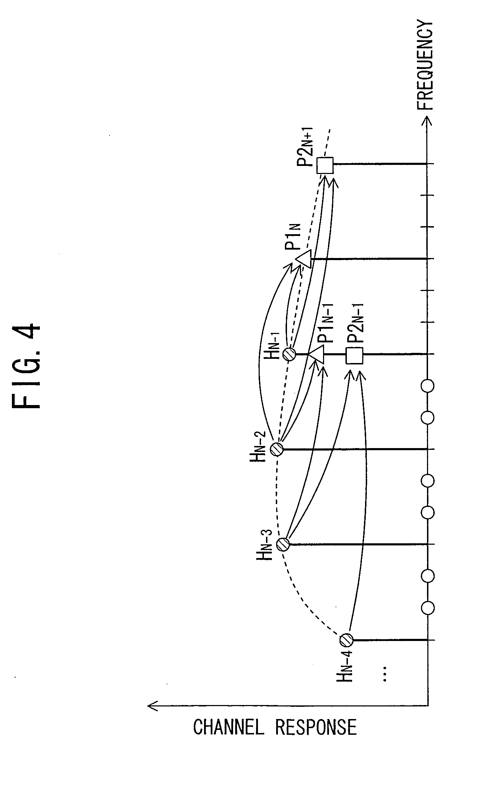

FIG. **3** is a block diagram showing a configuration of the adaptive filter **6**. Referring to FIG. **3**, the adaptive filter **6** includes channel estimation filters **61** and **62** and a signal adder **63**. FIG. **4** is a view diagrammatically illustrating values of channel responses input into the adaptive filter **6** of FIG. **3** and values of channel responses estimated in the adaptive filter **6**. Although each of the values of channel responses is a complex number (vector), only the real part thereof is shown in FIG. **4** for convenience. In FIG. **4**, the hatched circles represent values of channel responses for pilot carriers, and the white circles represent frequencies of data carriers.

Assume that the total number of pilot carriers in an OFDM signal is N (N is an integer) and indexes (0,1, ..., N-1) are given to the pilot carriers in the ascending order of corresponding frequencies. Assume also that the frequency

4

interval between the adjacent pilot carriers is $f_p$, and the frequency for the highest-frequency pilot carrier (index N-1) is $f_{N-1}$. Note herein that a frequency $f_{N-1}+nf_p$ outside the band of the OFDM signal is also called a pilot carrier frequency (index N-1+n; n is an integer equal to or more than 1) as the frequencies of the existing pilot carriers are called.

Hereinafter, discussed will be the case that the adaptive filter **6** estimates channel responses at frequencies $f_{N-1}+f_p$ and $f_{N-1}+2f_p$ at an OFDM symbol of a given time. Note that the channel response for a pilot carrier of index L at this OFDM symbol is represented by $H_L$ (in this embodiment, L is an integer satisfying $4 \leq L \leq N$).

The channel estimation filter **61** receives the channel responses H output from the time axis interpolation section **5**. The channel estimation filter **61** determines, from channel responses $H_{L-3}$ and $H_{L-2}$ for two adjacent pilot carriers (pilot carriers of indexes L-3 and L-2), an estimated channel response $P1_{L-1}$ for a pilot carrier of index L-1 adjacent to the above two pilot carriers on the higher-frequency side by computing

$$P1_{L-1} = H_{L-3} \times C1_0 + H_{L-2} \times C1_1 \tag{1}$$

where $C1_0$ and $C1_1$ are filter coefficients.

The channel estimation filter **61** determines the filter coefficients $C1_0$ and $C1_1$ so that the estimated channel response $P1_{L-1}$ is a value as close to a channel response $H_{L-1}$ for the pilot carrier of index L-1 as possible. More specifically, the channel estimation filter **61** repeats updating the filter coefficients $C1_0$ and $C1_1$ in the expression (1) so that the estimated channel response $P1_{L-1}$ becomes closer to the channel response $H_{L-1}$ (for example, so that the evaluation function based on the square of an error of the estimated channel response $P1_{L-1}$ with respect to the channel response $H_{L-1}$ becomes smaller). In the case shown in FIG. **4**, in which L = N, the filter coefficients $C1_0$ and $C1_1$ are calculated based on channel responses for pilot carriers of indexes N-3 and N-2.

Once the channel estimation filter **61** judges to have determined the final values for the filter coefficients $C1_0$ and $C1_1$ (for example, once the updating of the filter coefficients has been repeated a predetermined number of times), the channel estimation filter **61** determines an estimated channel response $P1_N$ based on the channel responses for the pilot carriers of indexes N-2 and N-1. In other words, the channel estimation filter **61** determines, from the channel responses $H_{N-2}$ and $H_{N-1}$ for the two selected pilot carriers, the estimated channel response $P1_N$ at a pilot carrier frequency of index N adjacent to the above two pilot carriers on the higher-frequency side using the calculated filter coefficients by computing

$$P1_N = H_{N-2} \times C1_0 + H_{N-1} \times C1_1 \tag{2}$$

and outputs the results to the signal adder **63.**

As described above, the channel estimation filter **61** can determine the estimated channel response $P1_N$ at the frequency $f_{N-1}+f_p$ apart from the selected pilot carrier of index N-1 by the frequency difference $f_p$ between the pilot carriers of indexes L-1 and L-2 by extrapolation.

The channel estimation filter **62** receives the channel responses H output from the time axis interpolation section **5**. The channel estimation filter **62** determines, from channel responses $H_{L-4}$ and $H_{L-3}$ for two adjacent pilot carriers (pilot carriers of indexes L-4 and L-3), an estimated channel response $P2_{L-1}$ for the pilot carrier of index L-1 that is second adjacent to the above two pilot carriers on the higher-frequency side via the pilot carrier of index L-2 by computing

$$P2_{L-1} = H_{L-4} \times C2_0 + H_{L-3} \times C2_1 \tag{3}$$

where $C2_0$ and $C2_1$ are filter coefficients.

The channel estimation filter **62** determines the filter coefficients $C2_0$ and $C2_1$ so that the estimated channel response $P2_{L-1}$ is a value as close to the channel response $H_{L-1}$ as possible. More specifically, the channel estimation filter **62** repeats updating the filter coefficients $C2_0$ and $C2_1$ in the expression (3) so that the estimated channel response $P2_{L-1}$ becomes closer to the channel response $H_{L-1}$ (for example, so that the evaluation function based on the square of an error of the estimated channel response $P2_{L-1}$ with respect to the channel response $H_{L-1}$ becomes smaller). In the case shown in FIG. **4,** in which L = N, the filter coefficients $C2_0$ and $C2_1$ are calculated based on channel responses for pilot carriers of indexes N-4 and N-3.

Once judging to have determined the final values for the filter coefficients $C2_0$ and $C2_1$, the channel estimation filter **62** determines an estimated channel response $P2_{N+1}$ based on the channel responses for the pilot carriers of indexes N-2 and N-1. In other words, the channel estimation filter **62** determines, from the channel responses $H_{N-2}$

and $H_{N-1}$ for the two selected pilot carriers, the estimated channel response $P2_{N+1}$ at a pilot carrier frequency of index N+1 located on the higher-frequency side of these two pilot carriers by computing

$$P2_{N+1} = H_{N-2} \times C2_0 + H_{N-1} \times C2_1 \qquad (4)$$

and outputs the results to the signal adder **63**.

The signal adder **63** adds the estimated channel responses $P1_N$ and $P2_{N+1}$ determined in the channel estimation filters **61** and **62** to the channel responses H, and outputs the results to the frequency axis interpolation section **7**.

Note that in the expressions (1) and (3), L = N may not necessarily satisfied, but the filter coefficients may be determined based on channel responses for other pilot carriers within the band of the OFDM signal.

As described above, in the adaptive filter, the filter coefficients for extrapolation can be calculated, and using the filter coefficients, channel responses at a pilot carrier frequency adjacent to two adjacent pilot carriers on the higher-frequency side thereof and also at a pilot carrier frequency adjacent to the above pilot carrier frequency can be estimated based on the channel responses for the two adjacent pilot carriers.

Even under various multipath environments and the like, channel responses at frequencies outside the band of the OFDM signal can be estimated considering amplitude variations and phase variations with the frequency. Therefore, the filtering along the frequency axis, in particular, can suppress a distortion generated at an end of the band of the OFDM signal. This improves the reception performance of the OFDM reception apparatus.

The adaptive filter may have n channel estimation filters for estimating channel responses for pilot carriers respectively apart by frequencies $f_p$, $2f_p$, ..., $nf_p$ from a group of pilot carriers used for computation. With these channel estimation filters, channel responses at frequencies apart by up to the frequency $nf_p$ from the group of pilot carriers can be estimated.

(Embodiment 2)

In an OFDM reception apparatus of Embodiment 2, channel responses at frequencies outside the band of an OFDM signal are estimated over a broad range using filter coefficients determined in the manner described in Embodiment 1.

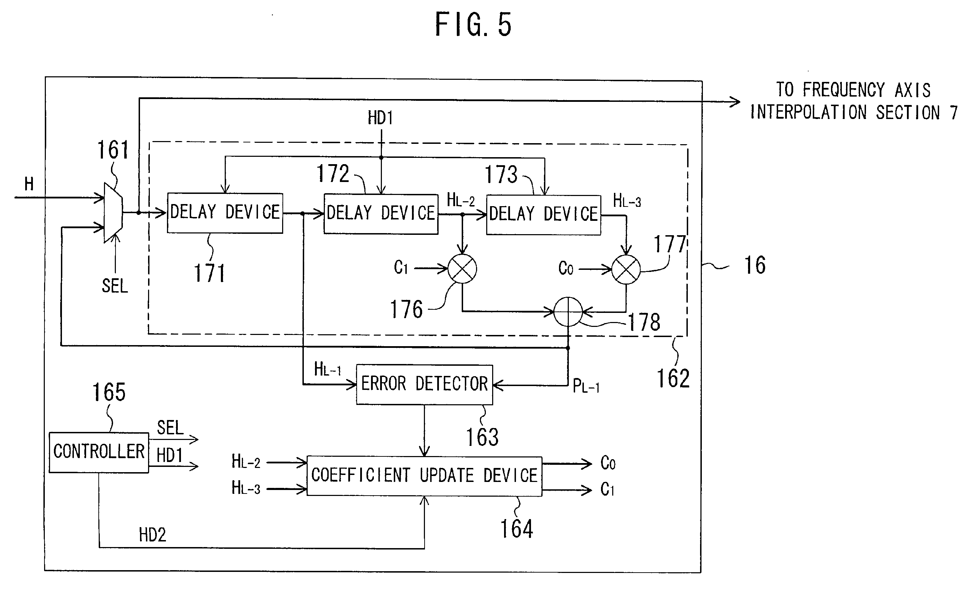

FIG. **5** is a block diagram of a configuration of an adaptive filter **16** of the OFDM reception apparatus of Embodiment 2 of the present invention. In this embodiment, the adaptive filter **16** is used in place of the adaptive filter **6** in the OFDM reception apparatus of FIG. **1**. The adaptive filter **16** includes a selector **161,** a complex filter **162,** an error detector **163**, a coefficient update device **164** and a controller **165**. The complex filter **162** includes delay devices **171, 172** and **173**, complex multipliers **176** and **177** and a complex adder **178**. The components of the OFDM reception apparatus of this embodiment other than the adaptive filter **16** are the same as those of the OFDM reception apparatus of FIG. **1**, and thus the description of these components is omitted here.

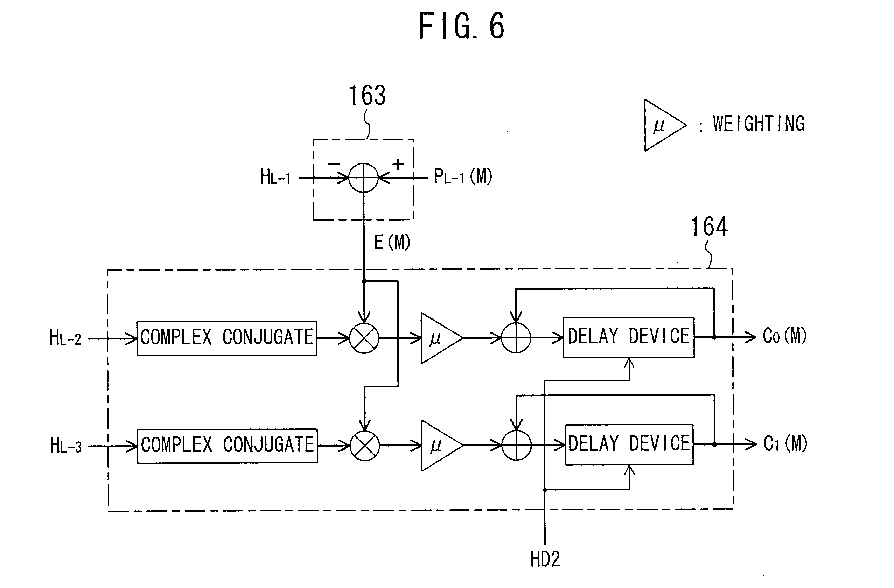

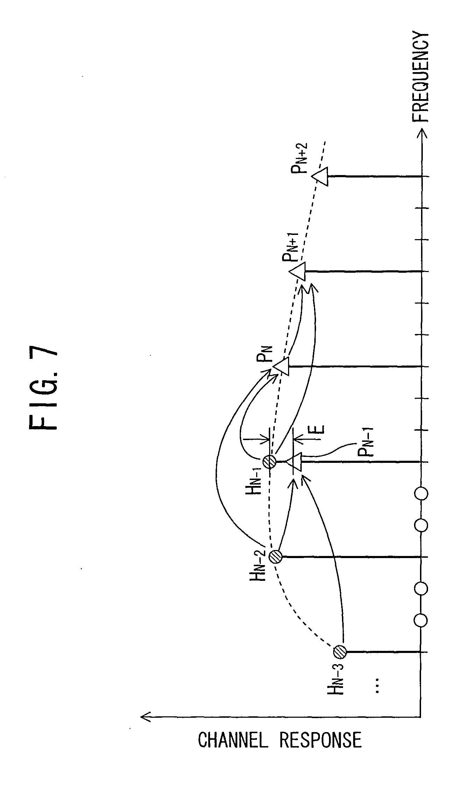

FIG. **6** is a block diagram showing a configuration of the error detector **163** and the coefficient update device **164** in FIG. **5**. FIG. **7** is a view diagrammatically showing values of channel responses input into the adaptive filter **16** of FIG. **5** and values of channel responses estimated in the adaptive filter **16**. Although each of the values of channel responses is a complex number, only the real part thereof is shown in FIG. **7** for convenience.

First, to determine filter coefficients, the selector **161** selects channel responses H according to a selection signal SEL output from the controller **165** and outputs the results to the complex filter **162**. The delay devices **171, 172** and **173,** which are registers, for example, store channel responses $H_{L-1}$, $H_{L-2}$ and $H_{L-3}$ for pilot carriers of indexes L-1, L-2 and L-3, respectively (in this embodiment, L is an integer satisfying $3 \leq L \leq N$).

The complex filter **162** performs filtering for the channel responses $H_{L-2}$ and $H_{L-3}$ using coefficients $C_1$ and $C_0$ received from the coefficient update device **164**. Specifically, the complex filter **162** computes

$$P_{L-1} = H_{L-3} \times C_0 + H_{L-2} \times C_1 \qquad (5)$$

which is similar to the expression (1), with the complex multipliers **176** and **177** and the complex adder **178,** and outputs the resultant estimated channel response $P_{L-1}$ to the error detector **163** together with the channel response $H_{L-1}$.

Referring to FIG. **6,** the error detector **163** determines an error E(M) given by

$$E(M) = P_{L-1}(M) - H_{L-1} \qquad (6)$$

where M is the number of times of updating of the coefficients, and P(M) refers to the filter output obtained after M times of coefficient updating.

The coefficient update device **164** determines the filter coefficients using a least mean square (LMS) algorithm based on the error E and the channel responses $H_{L-2}$ and $H_{L-3}$ stored in the delay devices **172** and **173.** In the LMS algorithm, operation is made so that the mean square of the expression (6), which is used as the evaluation function, becomes as small as possible. The evaluation function $J_L(M)$ is represented by

$$J_L(M) = A\,[|E(M)|^2] \qquad\qquad (L1)$$

where A[ ] represents a computation for determining the average.

The expression for updating the filter coefficients for estimating $H_{L-1}$ is represented by

$$C(M+1) = C(M) - \mu\,E(M)\,H^* \qquad\qquad (L2)$$

where C and H represent matrixes, and * represents a complex conjugate. For example, when the complex filter **162** has two taps, $C^T = [C_0,\,C_1]$ and $H^{*T} = [H^*_{L-2},\,H^*_{L-3}]$ (T represents transpose). Also, $\mu$ is a step parameter responsible for the coefficient update amount.

The coefficient update device **164** computes the expression (L2) and outputs the resultant new filter coefficients C(M+1) to the complex filter **162**. The complex filter **162** determines a new estimated channel response $P_{L-1}$ using the new filter coefficients. The error detector **163** computes the expression (6) using the new estimated channel response $P_{L-1}$.

The computation for updating the filter coefficients described above is terminated after repetition of the computation a predetermined number of times, for example. As a result, the evaluation function $J_L(M)$ can be made close to the smallest value. The controller **165** counts the number of times of the computation for updating the filter coefficients, and once judging termination of this computation, outputs a hold signal HD2 to the coefficient update device **164** for holding the output of the filter coefficients. The coefficient update device **164** holds the determined latest filter coefficients according to the hold signal HD2 and outputs the results.

Thus, using channel responses for two pilot carriers, filter coefficients for determining a channel response at a frequency other than the frequencies for the two pilot carriers are obtained. Once the filter coefficients are obtained, the controller **165** enables the delay devices **171** to **173** with a hold signal HD1. When the delay devices **172** and **173** receive and store channel responses $H_{N-1}$ and $H_{N-2}$, respectively, the controller **165** outputs the selection signal SEL to allow the selector **161** to select the output of the complex filter **162**. At this time, the complex filter **162** determines an estimated channel response $P_N$ by computing

$$P_N = H_{N-2} \times C_0 + H_{N-1} \times C_1$$

and outputs the results to the selector **161**. The selector **161** outputs the estimated channel response $P_N$ to the frequency axis compensation section **7** and the delay device **171**. The delay device **171** stores the received estimated channel response $P_N$.

The delay devices **172** and **173** then receive and store the estimated channel response $P_N$ and the channel response $H_{N-1}$, respectively. The complex filter **162** determines an estimated channel response $P_{N+1}$ by computing

$$P_{N+1} = H_{N-1} \times C_0 + P_N \times C_1$$

and outputs the results to the frequency axis compensation section 7 and the delay device **171** via the selector **161**. The delay device **171** stores the received estimated channel response $P_{N+1}$.

The delay devices **172** and **173** then receive and store the estimated channel responses $P_{N+1}$ and $P_N$, respectively. The complex filter **162** determines an estimated channel response $P_{N+2}$ by computing

$$P_{N+2} = P_N \times C_0 + P_{N+1} \times C_1$$

and outputs the results to the frequency axis compensation section **7** and the delay device **171** via the selector **161**.

Thus, by repeating the above operation, channel responses at frequencies gradually farther from the band of the OFDM signal are sequentially determined.

As described above, the OFDM apparatus of this embodiment repeats sequentially determining channel responses at given frequencies using estimated channel responses at other frequencies. By the recursive use of estimated channel responses, it is possible to estimate channel responses outside the band of the OFDM signal over a broad range with a small-scale circuit.

(Alteration to Embodiment 2)

In an OFDM reception apparatus of this alteration, the filter coefficients are determined using a recursive least square (RLS) algorithm.

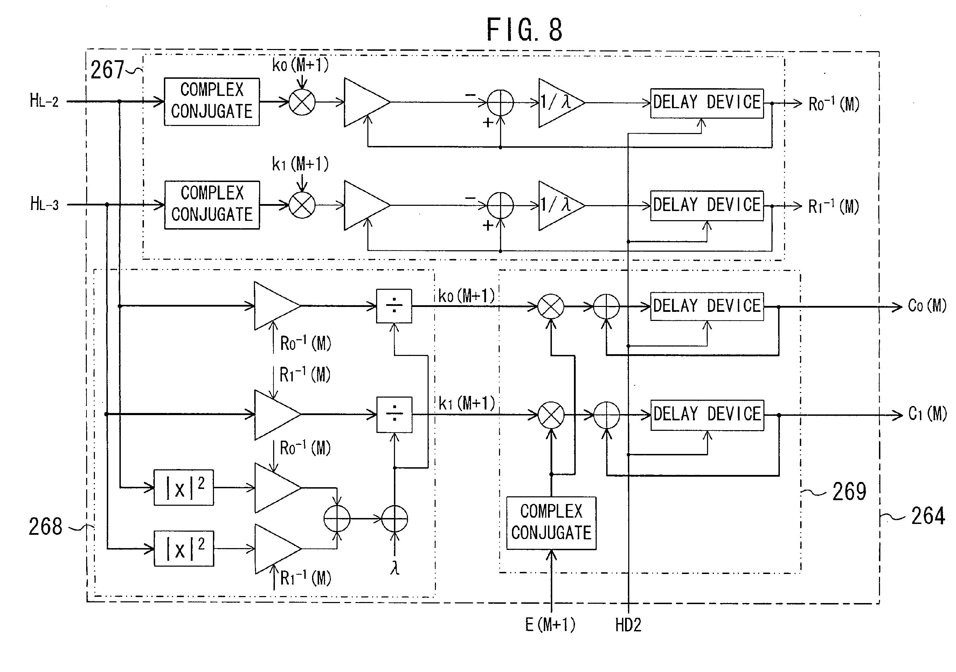

FIG. **8** is a block diagram showing a configuration of a coefficient update device **264** of the alteration to Embodiment 2. In this alteration, the coefficient update device **264** is used in place of the coefficient update device **164** in the adaptive filter of FIG. **5**. The illustrated coefficient update device **264** is for the case of determining two filter coefficients for the 2-tap complex filter **162**. In FIG. **8**, the bold lines are for vector signals, and the thin lines are for scalar signals. The coefficient update device **264** includes an autocorrelation inverse matrix generator **267**, a gain vector generator **268** and an RLS coefficient update portion **269**.

The coefficient update device **264** determines filter coefficients using the RLS algorithm based on the error E and the channel responses $H_{L-2}$ and $H_{L-3}$ stored in the delay devices **172** and **173**. In the RLS algorithm, operation is made so that the sum square of exponential weighted errors, which is used as the evaluation function, becomes as small as possible. The evaluation function $J_R(M)$ is represented by

$$J_R(M) = \sum_{i=1}^{M} \lambda^{M-i} |E(i)|^2 \qquad \ldots (R1)$$

where $\lambda$ ($0 < \lambda < 1$) is a forgetting factor.

The expression for updating the filter coefficients for estimating $H_{L-1}$ is represented by

$$C(M+1) = C(M) + k(M+1)\, E^*(M+1) \qquad (R2)$$

where $k(M)$ is a Kalman gain vector, which is represented by

$$k(M+1) = (R^{-1}(M)\,H) / (\lambda + H^{*T} R^{-1}(M)H) \qquad (R3)$$

where $R^{-1}$ is an inverse matrix of an autocorrelation matrix R of H, which is represented by

$$R^{-1}(M+1) = (R^{-1}(M) - k(M+1)\, H^{*T} R^{-1}(M)) / \lambda \qquad (R4)$$

The autocorrelation inverse matrix generator **267** computes the expression (R4) and outputs the resultant matrix $R^{-1}$ to the gain vector generator **268**. The gain vector generator **268** computes the expression (R3) and outputs the resultant Kalman gain vector k to the autocorrelation inverse matrix generator **267** and the RLS coefficient update portion **269**. The RLS coefficient update portion **269** computes the expression (R2) and outputs the resultant new filter coefficients C(M+1) to the complex filter **162**. The complex filter **162** determines a new estimated channel response $P_{L-1}$ using the received filter coefficients. The error detector **163** computes the expression (6) using the new estimated channel response $P_{L-1}$.

Once the updating of the filter coefficients as described above is repeated a predetermined number of times, for example, this computation of filter coefficients is terminated. As a result, the evaluation function $J_R(M)$ can be made close to the minimum. In general, an RLS algorithm is fast in coefficient convergence speed compared with an LMS algorithm. Therefore, the coefficient update device **264** of FIG. **8** can compute the filter coefficients with high speed.

(Embodiment 3)

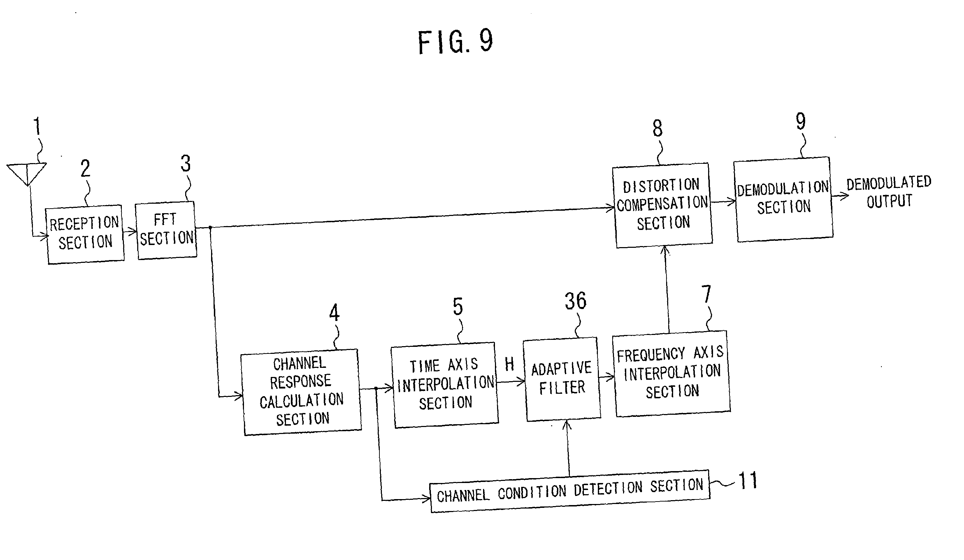

FIG. **9** is a block diagram of an OFDM reception apparatus of Embodiment 3 of the present invention. The OFDM reception apparatus of FIG. **9** is different from the OFDM reception apparatus of FIG. **1** in that an adaptive filter **36** is provided in place of the adaptive filter **6** and a channel condition detection section **11** is newly provided. The other components are the same as those of the OFDM reception apparatus of FIG. **1**, and thus description thereof is omitted here.

The channel condition detection section **11** detects the carrier interference state and the carrier to noise ratio (C/N) for each pilot carrier from the channel responses output from the channel response calculation section **4**, and notifies the adaptive filter **36** of the detection results.

Whichever pilot carriers are used for determination of filter coefficients based on channel responses for these pilot carriers, the resultant filter coefficients are not so much different from others. In view of this, the adaptive filter **36** calculates the filter coefficients based on channel responses for pilot carriers free from interference and good in C/N, not limited to channel responses for pilot carriers at and around the highest frequencies. Also, the adaptive filter **36** estimates a channel response for a pilot carrier subjected to interference or poor in C/N using the calculated filter coefficients, and outputs the estimated channel response in place of the channel response for the defective pilot carrier.

The OFDM reception apparatus of FIG. **9** determines the filter coefficients based on channel responses for pilot carriers in their good states, and also estimates channel responses at frequencies within the band of the OFDM signal, not only those at frequencies outside the band, using the determined filter coefficients. Therefore, effects of interference and noise on the determined channel responses can be suppressed, and thus the reception performance of the OFDM reception apparatus can be improved.

In Embodiments 1 and 2, channel responses for two adjacent pilot carriers were continuously used without change in determination of the filter coefficients. Alternatively, channel responses may be changed sequentially. The case that the adaptive filter **36** operates in this manner will be described.

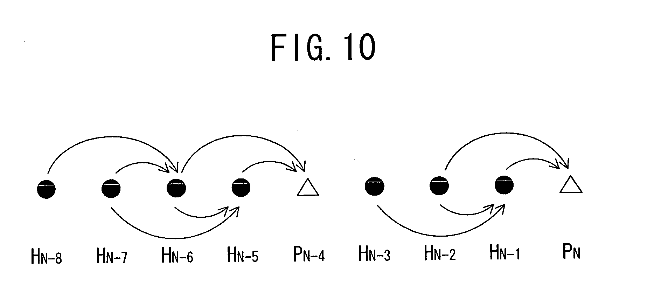

FIG. **10** is a view illustrating sequential change of channel responses used in determination of the filter coefficients, in which the channel responses used are arranged in the order of frequencies. In the following description, assume that the adaptive filter **36** uses the coefficient update device **164** in FIG. **6.**

The delay devices **171, 172** and **173** respectively store channel responses $H_{N-6}$, $H_{N-7}$ and $H_{N-8}$. The complex filter **162** computes

$$P_{N-6} = H_{N-8} \times C_0 + H_{N-7} \times C_1$$

which is similar to the expression (5), with the complex multipliers **176** and **177** and the complex adder **178,** and outputs the resultant estimated channel response $P_{N-6}$ to the error detector **163** together with the channel response $H_{N-6}$. The error detector **163** determines an error E(M) given by

$$E(M) = P_{N-6}(M) - H_{N-6},$$

and outputs the results to the coefficient update device **164**.

The coefficient update device **164** computes the expression (L2) and outputs the resultant new filter coefficients C(M+1) to the complex filter **162**.

At this time, under the control of the controller, the delay devices **171, 172** and **173** respectively store channel responses $H_{N-5}$, $H_{N-6}$ and $H_{N-7}$.

The complex filter **162** computes an expression similar to the expression (1) using the new filter coefficients, and outputs the resultant estimated channel response $P_{N-5}$ to the error detector **163** together with the channel response $H_{N-5}$. The operation is repeated in this way.

If detecting that the C/N of a pilot carrier of index N-4 is excessively low, the channel condition detection section **11** notifies the adaptive filter **36** of this detection. The adaptive filter **36** avoids use of a channel response $H_{N-4}$ for this carrier for determination of the filter coefficients, and outputs an estimated channel response $P_{N-4}$ to the frequency axis interpolation section **7** in place of the channel response $H_{N-4}$. In other words, the adaptive filter **36** outputs the estimated channel response $P_{N-4}$ once it is determined, and performs the updating of the filter coefficients using channel responses $H_{N-3}$ and $H_{N-2}$, and then using channel responses $H_{N-2}$ and $H_{N-1}$. Once the filter coefficients are updated using an error for a channel response $H_{N-1}$ for the pilot carrier at the highest frequency, the adaptive filter **36** terminates the updating of the filter coefficients.

With the adaptive filter **36** described above, the updating of the filter coefficients can be terminated without the necessity of any means such as counting the number of times of the updating.

In the embodiments described above, estimated was a channel response at a frequency higher than the frequencies of pilot carriers of which channel responses were used for the estimation. It is also possible to estimate a channel response at a frequency lower than these frequencies.

Also in the above embodiments, an estimated channel response was determined based on channel responses for two adjacent pilot carriers. Alternatively, estimation of a channel response may be made based on a channel response for one pilot carrier or channel responses for three or more adjacent pilot carriers. In this case, in the expressions (1) to (5) and the like, the number of terms may be made equal to the number of pilot carriers used in the estimation.

The interpolation along the time axis may be omitted. In the case of this omission, the processing by the adaptive filter may be performed based on channel responses for pilot carriers having pilot signals at the current symbol, that is, in the case shown in FIG. **2**, for example, based on channel responses determined every four pilot carriers.

As described above, the OFDM reception apparatus of the present invention can estimate channel responses correctly to enable correct interpolation along the frequency axis, and thus is useful as an OFDM reception apparatus that estimates channel responses to thereby improve its reception performance.

While the present invention has been described in preferred embodiments, it will be apparent to those skilled in the art that the disclosed invention may be modified in numerous ways and may assume many embodiments other than that specifically set out and described above. Accordingly, it is intended by the appended claims to cover all modifications of the invention which fall within the true spirit and scope of the invention.

## Claims

1. An OFDM reception apparatus for receiving an orthogonal frequency division multiplexing (OFDM) signal having pilot carriers for transmitting predetermined pilot signals, the pilot carriers being arranged at predetermined frequency intervals, the apparatus comprising:

   a channel response calculation section for determining channel responses for the pilot carriers and outputting the results; and
   an adaptive filter receiving a first channel response for a first pilot carrier and a second channel response for at least one second pilot carrier at a same symbol, for repeating performing predetermined computation for the second channel response and updating a coefficient used in the computation so that the result of the computation is closer to the first channel response, the adaptive filter also performing, once the final value of the coefficient is determined, the predetermined computation for a channel response at a selected pilot carrier frequency of the same number as the number of the at least one second pilot carrier at the same symbol as the second channel response, and outputting the computation result as an estimated channel response at a frequency apart from the selected pilot carrier frequency by the minimum of the difference in frequency between the first pilot carrier and the second pilot carrier.

2. The OFDM reception apparatus of Claim 1, wherein the adaptive filter uses two or more adjacent pilot carriers as the at least one second pilot carrier, and determines the estimated channel response using channel responses at the selected pilot carrier frequencies of the same number as the number of the two or more adjacent pilot carriers.

3. The OFDM reception apparatus of Claim 2, wherein the adaptive filter uses a pilot carrier adjacent to the first pilot carrier as one of the second pilot carriers, and determines a channel response at a pilot carrier frequency adjacent to the selected pilot carrier frequencies as the estimated channel response.

4. The OFDM reception apparatus of Claim 3, wherein the adaptive filter repeats determining a new estimated channel response using the estimated channel response and part of the channel responses used as the second channel responses in determination of the estimated channel response as new second channel responses.

5. The OFDM reception apparatus of Claim 1, wherein the selected pilot carrier frequency includes a frequency of a pilot carrier having the highest frequency or a frequency of a pilot carrier having the lowest frequency, and the estimated channel response corresponds to a frequency outside the band of the OFDM signal.

6. The OFDM reception apparatus of Claim 1, further comprising:

   a frequency axis interpolation section for determining, by interpolation, a channel response for a data carrier arranged at a frequency between pilot carriers in the OFDM signal based on the channel responses determined in the channel response calculation section and the estimated channel response; and

a distortion compensation section for compensating, using the channel response determined in the frequency axis interpolation section, a waveform distortion in a data carrier corresponding to this channel response.

7. The OFDM reception apparatus of Claim 1, wherein the adaptive filter comprises:

a complex filter for performing the predetermined computation for the second channel response;
an error detector for detecting an error in the result of the predetermined computation with respect to the first channel response and outputting the detection result;
a coefficient update device for updating the coefficient so that the error becomes smaller and outputting the result to the complex filter; and
a controller for controlling the coefficient update device to continue outputting the determined latest coefficient once judging that the final value of the coefficient has been determined.

8. The OFDM reception apparatus of Claim 7, wherein the coefficient update device updates the coefficient so that the value of an evaluation function based on the square of the error becomes smaller.

9. The OFDM reception apparatus of Claim 8, wherein the coefficient update device updates the coefficient by a least mean square (LMS) algorithm.

10. The OFDM reception apparatus of Claim 8, wherein the coefficient update device updates the coefficient by a recursive least square (RLS) algorithm.

# FIG. 1

EP 1 533 961 A2

# FIG. 2

FREQUENCY
(CARRIER)

TIME
(SYMBOL)

○ DATA

◍ S P

◪ C P

EP 1 533 961 A2

# FIG. 3

TO FREQUENCY AXIS
INTERPOLATION SECTION 7

EP 1 533 961 A2

EP 1 533 961 A2

# FIG. 4

# FIG. 5

TO FREQUENCY AXIS
INTERPOLATION SECTION 7

EP 1 533 961 A2

FIG. 6

: WEIGHTING

$\mu$

163

164

$H_{L-1}$

+ / −

$P_{L-1}(M)$

$E(M)$

$H_{L-2}$ → COMPLEX CONJUGATE → $\otimes$ → $\mu$ → $\oplus$ → DELAY DEVICE → $C_0(M)$

$H_{L-3}$ → COMPLEX CONJUGATE → $\otimes$ → $\mu$ → $\oplus$ → DELAY DEVICE → $C_1(M)$

HD2

FIG. 7

EP 1 533 961 A2

# FIG. 8

EP 1 533 961 A2

# FIG. 9

EP 1 533 961 A2

# FIG. 10

$H_{N-8}$  $H_{N-7}$  $H_{N-6}$  $H_{N-5}$  $P_{N-4}$  $H_{N-3}$  $H_{N-2}$  $H_{N-1}$  $P_N$